# FASCICULE DE BREVET EUROPEEN

(11) **EP 0 792 610 B1**
(45) Date de publication et mention de la délivrance du brevet: **04.08.1999**
(21) Numéro de dépôt: 97400344.4
(22) Date de dépôt: 17.02.1997
(51) Int. Cl.: A47J 43/07

(54) **Pied de mixage**
Stabmixer
Mixing rod

(30) Priorité: 01.03.1996 FR 9602645
(43) Date de publication de la demande: 03.09.1997
(73) Titulaire: MOULINEX S.A., 75008 Paris (FR)
(72) Inventeur: Martin, Philippe, 53100 Mayenne (FR)
(74) Mandataire: Busquets, Jean-Pierre

(56) Documents cités:
- BE-A- 490 380
- BE-A- 502 600
- CH-A- 231 689
- CH-A- 351 375
- FR-A- 1 176 214
- FR-A- 1 225 696
- US-A- 2 270 480
- US-A- 3 069 144

## Description

L'invention se rapporte à un pied de mixage destiné en particulier à broyer des matières alimentaires et comprenant une garde tubulaire dont la partie supérieure est adaptée à être montée sur un bloc moteur et dont la partie inférieure comporte une cloche dont la jupe présente des orifices et dont le sommet est traversé par un arbre rotatif disposé longitudinalement dans ladite garde, l'extrémité supérieure étant destinée à venir s'accoupler avec ledit bloc moteur, tandis que l'extrémité inférieure est solidaire en rotation d'un outil de mixage agencé dans la cloche et porte un outil supplémentaire agencé entre le sommet de la cloche et l'outil de mixage.

Un pied de mixage de ce genre décrit dans le brevet suisse CH-A-351 375 est particulièrement bien adapté à la préparation des potages dans lesquels, par exemple, les morceaux de légumes ou pommes de terre cuites baignent dans un liquide, mais ne convient pas bien aux préparations comportant des phases où les aliments sont pratiquement travaillés à sec telles que, par exemple, des préparations à base de pain, de viande, de fromage.

Un inconvénient concomitant à ces préparations sèches est le risque de blocage du rotor du moteur par bourrage des aliments mal broyés entre les outils et la cloche.

La présente invention a pour but de supprimer ces inconvénients. Un pied de mixage selon l'invention est caractérisé en ce que les orifices (16a) sont répartis dans la région basse de la jupe (15) à proximité de l'outil de mixage (21) et les orifices (16b) sont répartis dans la région haute de la jupe (15) à proximité de l'outil supplémentaire (24).

Grâce à la combinaison de l'arbre à double outil et des orifices de la jupe, on réalise deux fonctions combinées, à savoir une première fonction de mixage et désintégration qui attaque les aliments secs rencontrés et une seconde action complémentaire qui parfait la désintégration et qui crée avec les autres aliments ou liquide un courant d'évacuation des aliments finement broyés hors de la cloche. Ce double étage d'outils permet donc de réaliser avec un bon rendement des préparations consistantes ainsi que des purées de fruits.

De plus, le pied de mixage est parfaitement adapté tant au travail de petites quantités d'aliments telles que des préparations pour les bébés ou des mayonnaises au cours desquelles une circulation des aliments ou ingrédients mixés s'effectuent préférentiellement de l'outil de mixage vers les orifices de sortie de la région basse, que tant au travail de quantités importantes au cours desquelles une circulation des aliments mixés s'effectuent de façon plus intensive par les orifices des deux régions basse et haute et préférentiellement par les orifices de la région haute.

Les caractéristiques et avantages de l'invention ressortiront d'ailleurs de la description qui va suivre, à titre d'exemple non limitatif, en référence aux dessins annexés dans lesquels :
- la figure 1 représente, partiellement en élévation et partiellement en coupe, un pied de mixage selon l'invention ;
- la figure 2 est une variante de réalisation d'une cloche d'un pied de mixage selon l'invention représentée en coupe et à plus grande échelle.
- la figure 3 est une coupe partielle d'une variante de réalisation de la région basse de la cloche de la figure 2.

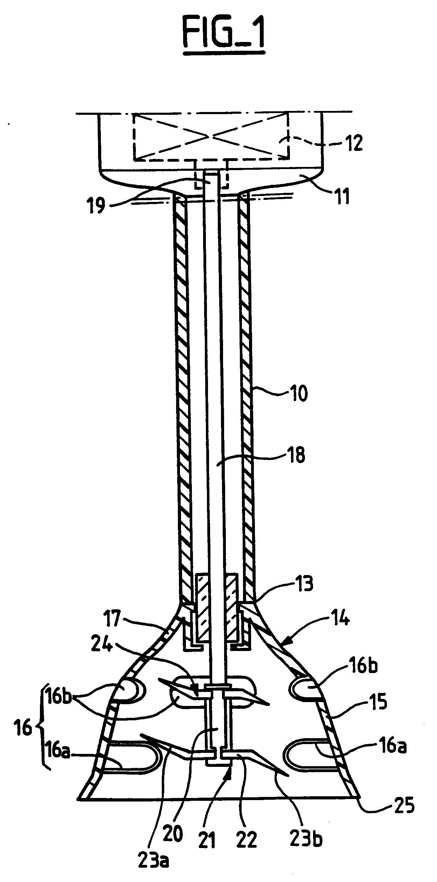

Le pied de mixage représenté à la figure 1 comprend une garde tubulaire 10 dont la partie supérieure 11 est adaptée à être montée par exemple sur un bloc moteur 12 (schématisé en traits interrompus) d'un mixeur, et dont la partie inférieure 13 comporte une cloche 14 dont la jupe 15 présente des orifices de sortie référencé dans leur ensemble par 16 et dont le sommet 17 est traversé par un arbre rotatif 18 disposé longitudinalement dans la garde tubulaire 10. Comme représenté, l'extrémité supérieure 19 de l'arbre est destinée à venir s'accoupler avec le bloc moteur 12 par tout moyen connu d'accouplement, tandis que l'extrémité inférieure 20 dudit arbre est solidaire en rotation d'un outil de mixage 21 agencé dans la cloche 14.

L'outil de mixage 21 comprend, par exemple, un moyeu 22 disposé orthogonalement à l'arbre 18 et portant deux couteaux 23a-23b coudés en sens opposés et diamétralement opposés, l'un étant ainsi orienté vers le haut de la cloche et l'autre étant orienté vers le base de la cloche.

Selon l'invention, l'extrémité inférieure 20 de l'arbre 18 porte un outil supplémentaire 24 agencé entre le sommet 17 de la cloche 14 et l'outil de mixage 21.

Selon une première réalisation illustrée à la figure 1, l'outil supplémentaire 24 présente une forme semblable à celle de l'outil 21.

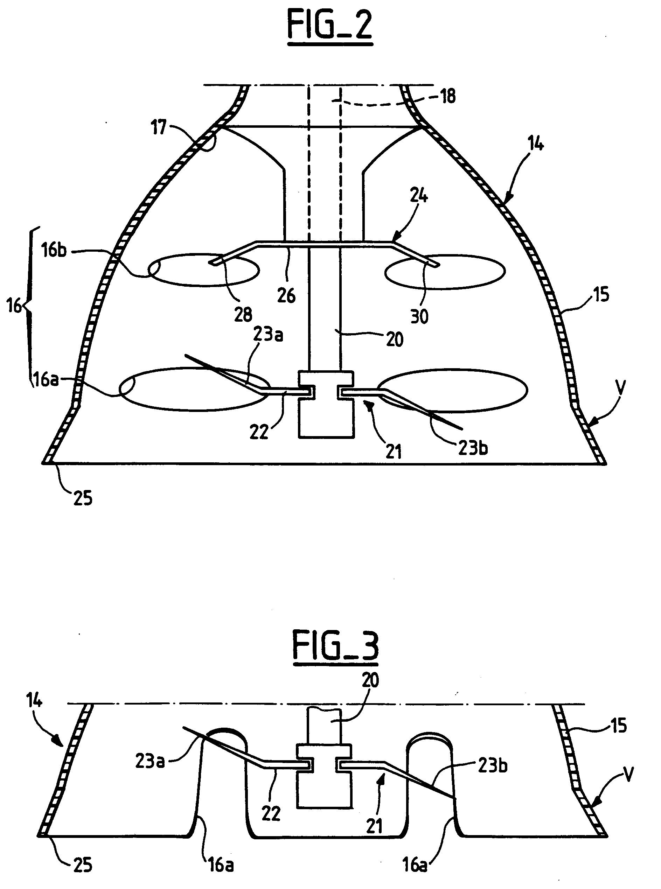

Selon une variante illustrée à la figure 2 et dans laquelle on a gardé les mêmes références générales pour des éléments communs, l'outil supplémentaire 24 comporte un moyeu 26 transversal à l'arbre 18 et portant deux couteaux 28 et 30 diamétralement opposés et coudés vers la région inférieure de la jupe 15.

Ainsi grâce à l'invention, par exemple lors d'une préparation d'un potage typique espagnol appelé GASPACHO dans lequel une quantité importante d'ingrédients tels que tomates cuites et crues, piments, concombre et pain sont rassemblés dans un récipient, l'outil de mixage 21, dans une première phase, broie et déchiquette les ingrédients de consistance sèche tels que le pain, les piments, tandis que l'outil supplémentaire 24 divise plus finement les ingrédients pré-broyés et assure, dans une seconde phase rendue plus liquide, par effet de pompage en combinaison avec l'outil de mixage, une circulation violente des ingrédients dans la région axiale autour de l'extrémité 20 de l'arbre 18 et contre la paroi interne de la cloche, s'opposant ainsi, d'une part, à la création d'un vortex axial néfaste à la division des ingrédients, et d'autre part à l'agglomération d'aliments mal broyés entre la cloche 14 et l'outil de mixage 21, et notamment entre le sommet 17 et les outils 21 et 24.

Dans le cas de préparation où le liquide apporté lors du mixage des aliments est important, l'effet de pompage obtenu par la combinaison de l'outil de mixage 21 et de l'outil supplémentaire 24 parfait la circulation tourbillonnaire de la préparation liquide dans tout le volume interne de la cloche.

Un autre avantage non négligeable de l'invention concerne la puissance du moteur électrique utilisé. En effet, en éliminant les problèmes de bourrage d'aliments sous la cloche 14 ou de freinage des couteaux sur les aliments durs ou secs, qui peuvent entraîner le blocage du rotor du moteur, on peut utiliser des moteurs de plus petite puissance de l'ordre par exemple de 120 Watts et donc d'un encombrement et d'un poids plus réduits, ce qui facilite, non seulement, la préhension par l'utilisateur du mixeur, mais aussi son utilisation prolongée.

Selon une autre caractéristique importante de l'invention, les orifices 16 sont répartis dans les régions basse et haute de la jupe 15 de la cloche 14 formant ainsi deux ceintures ajourées ayant des orifices bas 16a et haut 16b. Les orifices 16a sont pratiqués au voisinage du bord inférieur 25 de la jupe 15 et présentent préférentiellement chacun une forme oblongue s'étendant pratiquement parallèlement au bord inférieur 25.

Comme on le voit l'outil de mixage 21 est agencé en majeure partie en regard des orifices (16a) pratiqués dans la région basse de la jupe, c'est-à-dire que le moyeu 16 et une partie coudée de chaque couteau 22-23 est située en regard des espaces matérialisés par les orifices.

Selon une autre réalisation schématisée à la figure 3 dans laquelle on a gardé les mêmes références pour désigner des éléments semblables, les orifices 16a de la région basse sont formés par des échancrures pratiquées dans le bord inférieur 25 de la jupe.

Grâce à cette disposition de l'outil de mixage 21, on réalise lors de petites préparations telles que mayonnaises, bouillies pour les bébés, une bonne circulation des matières broyées entre les couteaux 23a-23b et les orifices 16a du fait que la centrifugation s'effectue dans une zone transversale commune à ces orifices et à l'outil de mixage. Quant à l'outil supplémentaire 24, il procure, notamment dans le cas de la préparation de la mayonnaise, une aération propice à l'émulsion.

Comme représenté sur la figure 1, l'outil supplémentaire 24, est également agencé en majeure partie en regard des orifices 16b pratiqués dans la région haute de la jupe 15 de manière à assurer un bon effet de pompage à l'aspiration et au refoulement au travers desdits orifices.

Selon une variante de réalisation illustrée à la figure 2, l'outil supplémentaire 24 comporte un moyen 26 transversal à l'arbre 18 et portant deux couteaux 28 et 30 diamétralement opposés et coudés vers la région inférieure de la jupe 15. Cet outil 24 est ici agencé en majeure partie, c'est-à-dire le moyeu 26 et pratiquement les deux tiers des couteaux coudés 28-30, au-dessus des orifices 16b.

Ainsi l'on peut agiter le pied de mixage de haut en bas et inversement sans provoquer de projections violentes latérales puisque le refoulement au travers des orifices 16b n'est plus direct mais légèrement dévié vers le bas de la cloche ; perfectionnement non négligeable lorsque l'on travaille des préparations dans des récipients sans bord élevé.

En outre, comme illustré aux figures 2 et 3, la jupe 15 présente dans sa région mitoyenne au bord 25 une forme évasée V améliorant ainsi, d'une part, le pilonnage de la préparation à travailler, et d'autre part, l'écoulement des filets de la préparation rendue fluide autour du bord 25 sous l'effet de succion amplifiée par l'empilage des outils 21 et 24.

## Revendications

1. Pied de mixage comprenant une garde tubulaire (10) dont la partie supérieure (11) est adaptée à être montée sur un bloc moteur (12) et dont la partie inférieure (13) comporte une cloche (14) dont la jupe (15) présente des orifices (16) et dont le sommet (17) est traversé par un arbre rotatif (18) disposé longitudinalement dans ladite garde, l'extrémité supérieure (19) étant destinée à venir s'accoupler avec ledit bloc moteur (12), tandis que l'extrémité inférieure (20), est solidaire en rotation d'un outil de mixage (21) agencé dans la cloche (14) et porte un outil supplémentaire (24) agencé entre le sommet (17) de la cloche (14) et l'outil de mixage (21),
**caractérisé en ce que** les orifices (16a) sont répartis dans la région basse de la jupe (15) à proximité de l'outil de mixage (21) et les orifices (16b) sont répartis dans la région haute de la jupe (15) à proximité de l'outil supplémentaire (24).

2. Pied de mixage selon la revendication 1,
**caractérisé en ce que** les orifices (16a) de la région basse sont pratiqués au voisinage du bord inférieur (25) de la jupe (15).

3. Pied de mixage selon la revendication 2,
**caractérisé en ce que** les orifices (16a) de la région basses présentent chacun une forme oblongue s'étendant pratiquement parallèlement au bord inférieur (25) de la jupe (15).

4. Pied de mixage selon la revendication 1,
**caractérisé en ce que** les orifices (16a) de la région basse sont formés par des échancrures pratiquées dans le bord inférieur (25) de la jupe (15).

5. Pied de mixage selon l'une quelconque des revendications 2 à 4,
**caractérisé en ce que** l'outil de mixage (21) est agencé en majeure partie en regard des orifices (16a) pratiqués dans la région basse de la jupe (15).

6. Pied de mixage selon l'une quelconque des revendications 2 à 4,
**caractérisé en ce que** l'outil supplémentaire (24) est agencé en majeure partie en regard des orifices (16b) pratiqués dans la région haute de la jupe (15).

7. Pied de mixage selon l'une quelconque des revendications 2 à 4,
**caractérisé en ce que** l'outil supplémentaire (24) est agencé en majeure partie au-dessus des orifices (16b) pratiqués dans la région haute de la jupe (15).

8. Pied de mixage selon l'une quelconque des revendications précédentes,
**caractérisé en ce que** l'outil supplémentaire (24) comporte un moyeu (26) transversal à l'arbre (18) et portant deux couteaux (28-30) diamétralement opposés coudés vers la région inférieure de la jupe (15).

9. Pied de mixage selon l'une quelconque des revendications précédentes,
**caractérisé en ce que** la jupe (15) présente dans sa région mitoyenne au bord inférieur (25) une forme évasée V.

## Claims

1. Mixing rod comprising a tubular guard (10), the top part (11) of which is adapted to be mounted on a motor unit (12) and the bottom part (13) of which has as bell (14) whose skirt (15) has orifices (16) and whose top (17) has passing through it a rotary shaft (18) disposed longitudinally in said guard, the top end (19) being intended to be coupled with said motor unit (12), whilst the bottom end (20) is integral with respect to rotation with a mixing tool (21) arranged in the bell (14) and carries a supplementary tool (24) arranged between the top (17) of the bell (14) and the mixing tool (21),
**characterised in that** the orifices (16a) are distributed in the lower region of the skirt (15) close to the mixing tool (21) and the orifices (16b) are distributed in the upper region of the skirt (15) close to the supplementary tool (24).

2. Mixing rod according to claim 1,
**characterised in that** the orifices (16a) in the lower region are formed close to the bottom edge (25) of the skirt (15).

3. Mixing rod according to claim 2,
**characterised in that** the orifices (16a) in the lower region each have an oblong shape extending practically parallel to the bottom edge (25) of the skirt (15).

4. Mixing rod according to claim 1,
**characterised in that** the orifices (16a) in the lower region are formed by scallops formed in the bottom edge (25) of the skirt (15).

5. Mixing rod according to any one of claims 2 to 4,
**characterised in that** the mixing tool (21) is arranged for the major part opposite to the orifices (16a) formed in the lower region of the skirt (15).

6. Mixing rod according to any one of claims 2 to 4,
**characterised in that** the supplementary tool (24) is arranged for the major part opposite to the orifices (16b) formed in the upper region of the skirt (15).

7. Mixing rod according to any one of claims 2 to 4,
**characterised in that** the supplementary tool (24) is arranged for the major part above the orifices (16b) formed in the upper region of the skirt (15).

8. Mixing rod according to any one of the preceding claims,
**characterised in that** the supplementary tool (24) has a hub (26) transverse to the shaft (18) and carrying two diametrically opposed blades (28-30) angled towards the lower region of the skirt (15).

9. Mixing rod according to any one of the preceding claims,
**characterised in that** the skirt (15) has, in its region adjoining the bottom edge (25), a splayed shape V.

## Patentansprüche

1. Mixstab mit einer rohrförmigen Ummantelung (10), deren oberer Bereich (11) so ausgebildet ist, daß er beispielsweise an einen Motorblock (12) gekuppelt werden kann, und deren unterer Bereich (13) eine Glocke (14) aufweist, deren Schürze (15) Austrittsöffnungen (16) aufweist, und deren Spitze (17) von einer längs in der rohrförmigen Ummantelung (10) angeordneten Welle (18) durchsetzt ist, deren oberes Ende (19) an den Motorblock (12) ankuppelbar ist, während ihr unteres Ende (20) drehfest mit einem in der Glocke (14) angeordneten Mixwerkzeug (21) verbunden ist und ein zusätzliches Werkzeug (24) trägt, das zwischen der Spitze (17) der Glocke (14) und dem Mixwerkzeug (21) angeordnet ist,
**dadurch gekennzeichnet, daß** die Öffnungen (16a) im unteren Bereich der Schürze (15) nahe dem Mixwerkzeug (21) und die Öffnungen (16b) im oberen Bereich der Schürze (15) nahe dem zusätzlichen Werkzeug (24) verteilt sind.

2. Mixstab nach Anspruch 1,
**dadurch gekennzeichnet, daß** die Öffnungen (16a) des unteren Bereichs nahe dem unteren Rand (25) der Schürze (15) ausgebildet sind.

3. Mixstab nach Anspruch 2,
**dadurch gekennzeichnet, daß** die Öffnungen (16a) des unteren Bereichs jeweils eine längliche Form aufweisen und sich praktisch parallel zum unteren Rand (25) der Schürze (15) erstrecken.

4. Mixstab nach Anspruch 1,
**dadurch gekennzeichnet, daß** die Öffnungen (16a) des unteren Bereichs durch im unteren Rand (25) der Schürze (15) ausgebildete Einkerbungen gebildet sind.

5. Mixstab nach einem der Ansprüche 2 bis 4,
**dadurch gekennzeichnet, daß** das Mixwerkzeug (21) größtenteils gegenüber den im unteren Bereich der Schürze (15) ausgebildeten Öffnungen (16a) angeordnet ist.

6. Mixstab nach einem der Ansprüche 2 bis 5,
**dadurch gekennzeichnet, daß** das zusätzliche Werkzeug (24) größtenteils gegenüber den im oberen Bereich der Schürze (15) ausgebildeten Öffnungen (16b) angeordnet ist.

7. Mixstab nach einem der Ansprüche 2 bis 5,
**dadurch gekennzeichnet, daß** das zusätzliche Werkzeug (24) größtenteils oberhalb der im oberen Bereich der Schürze (15) ausgebildeten Öffnungen (16b) angeordnet ist.

8. Mixstab nach einem der vorhergehenden Ansprüche,
**dadurch gekennzeichnet, daß** das zusätzliche Werkzeug (24) eine quer zur Welle (18) verlaufende Nabe (26) aufweist, die zwei diametral entgegengesetzte Messer (28-30) trägt, die zum unteren Bereich der Schürze (15) hin abgewinkelt sind.

9. Mixstab nach einem der vorhergehenden Ansprüche,
**dadurch gekennzeichnet, daß** die Schürze (15) in ihrem nahe dem Rand (25) gelegenen Bereich eine ausgestellte Form (V) aufweist.
